# EUROPEAN PATENT APPLICATION

(11) **EP 0 683 034 A2**
(43) Date of publication of application: **22.11.1995**
(21) Application number: 95201306.8
(22) Date of filing: 18.05.1995
(51) Int. Cl.: B31B 19/74, B29C 65/00

(54) **Two-level static charging**

(30) Priority: 19.05.1994 US 245778
(71) Applicant: FMC CORPORATION, Philadelphia, PA 19103 (US)
(72) Inventor: De Smedt, Eric, B-1745 Opwijk (BE); Verbeke, Wim, B-9300 Aalst (BE)
(74) Representative: Hamilton, Raymond

(57) **Abstract**

A bag-in-process assembly having a plurality of plies of bag material, one ply of material laying over others of said plurality of plies of material; a strong electro-static charge in a first zone of said bag-in-process assembly causing said one ply of material to be electro-statically attracted to said others of said plurality of plies of material.

## Description

This invention relates to inducing a static charge in a bag-in-process assembly of two plastic plys of material that is being formed into a plastic bag by heat sealing the margins of the bag.

In the plastic bag manufacturing field it is known that a static charge can be induced in a bag-in-process assembly of plys to statically hold these two plys together as the assembly travels through the manufacturing process. With the plys maintained in face-to-face engagement there is a diminished possibility that air will get between the plys and separate them as they travel through the bag making machine operation. The electro-static charge is induced across the entire surface of the bag-in-process and therefore cannot be so strong as to prevent the bag, after being completed, from being easily opened either by an automatic bag filler or by the consumer using the bag.

It is believed that a German based bag machine manufacturing company, Lemacher and Sons, has provided machinery that includes static charge generating equipment for keeping the open side of a draw string bag closed with static charges to avoid air being trapped inside the bag. FMC Corporation, the assignee of this invention, has also used static inducers over a period of more than a decade on its twin lane bag making machine to avoid air being trapped inside the open tube, which is the shape of the bag-in-process, as it is being manufactured on such a twin lane bag machine.

In the known electro-static inducing embodiments the electro-static charge was applied to a general area of a multiply assembly and no attempt was made to differentiate one zone having a certain level of electro-static charge from a second zone having a different, either higher or lower, level of charge. The instant invention accomplishes this.

The inventor's disclosure is the ability of adjusting the level of static charging at the same cycle speed as the bag maker cycle speed. Thus, as the bag making speed increases the signal to the static generator trigger will be more frequent such that registration of the static charge relative to a given location will remain within a predetermined zone. The multiply zone of a bag in the vicinity of a potential seal may have a very high loading of static charge to assist in holding the multiply assembly together before the sealing operation occurs and a lesser loading of electro-static charge in the body of the bag.

The following disclosure will convey the manner in which the inventor accomplishes the registration of the high static zone to the bag-in-process.

The invention is illustrated by the attached drawing figures in which:
Fig. 1 is a thematic presentation of the elements of the bag making machine involved in the invention;
Fig. 2 is a plan view of the Fig. 1 presentation;
Fig. 3 is a plan view of a series of connected bags-in-process;
Fig. 4 is a plan view of a series of connected bags-in-process of a type different from those shown in Fig. 3.

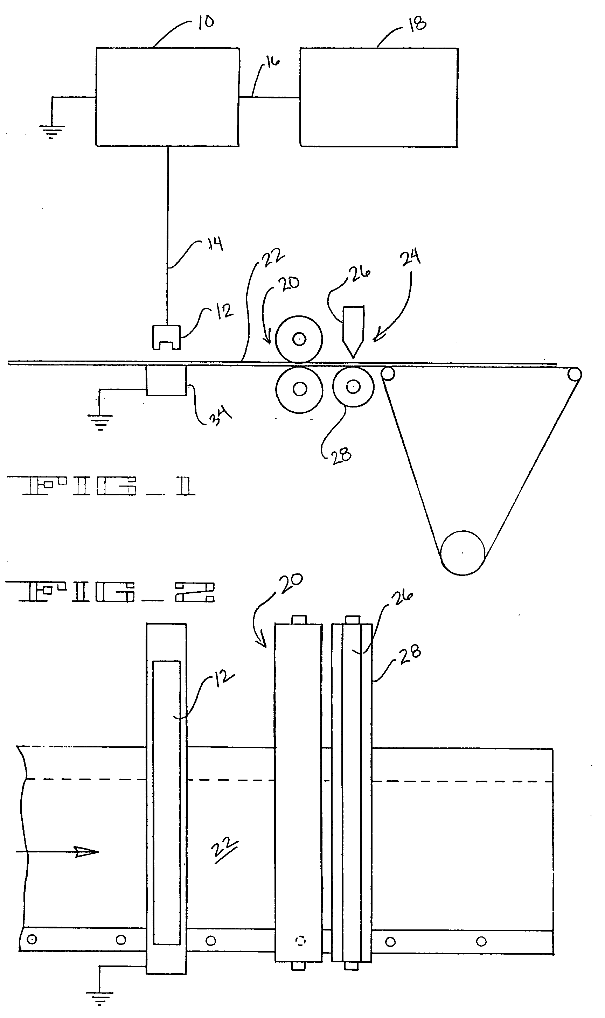

The apparatus related to the invention is shown thematically in Fig. 1. In this figure only those parts of a conventional poly bag making machine that relate to the invention are show. These include a static generator 10 electrically connected to a static inducer 12 by means of conduit 14. The static inducer is connected by a signal transmission conduct 16 to the bag making machine master or auxiliary machine control 18. A set of draw rolls, generally 20 is provided to draw film 22 through the static inducer 12 zone and into the sealing zone generally 24. The sealing zone, generally 24, includes a conventional seal bar 26 and seal roll 28.

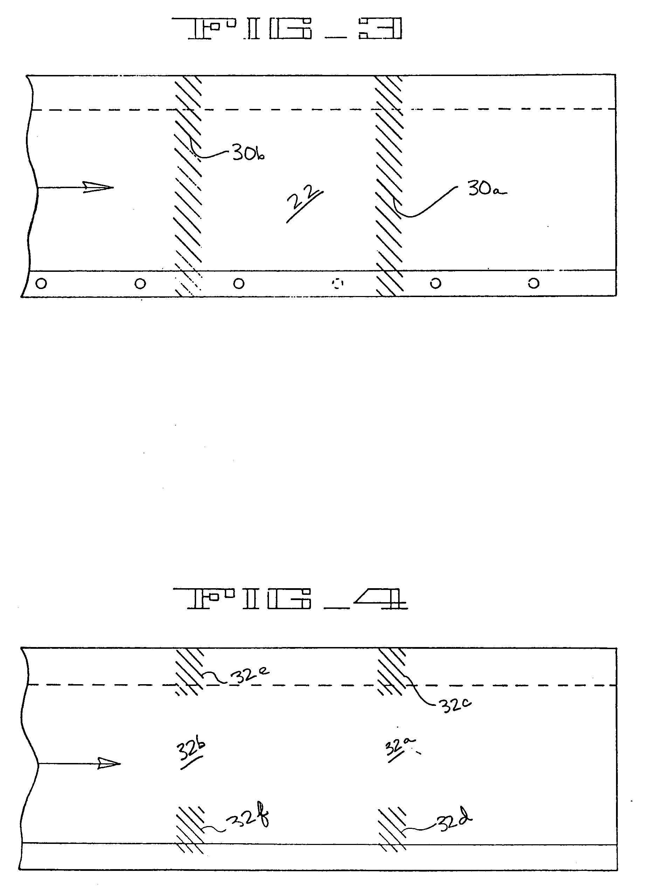

Fig. 2 is a plan view of some of the Fig. 1 apparatus―namely the static inducer 12, the top roll of the set of draw rolls 20, the seal bar 26 and the seal roll 28. More discernible in this view is the bag-in-process film 22.

Fig. 3 shows the bag in process with zones of high static represented by shaded areas 30a and 30b. In Fig. 3 these zones of high static extend from edge-to-edge of the bag-in-process and will be in the zone where the sealing bar 26 will seal and/or seal and cut which would be the more typical operation.

In Fig. 4 there are two generally lateral zones where a higher level of static has been applied. These lateral zones are 32a and 32b and the actual zones where a higher level of static is applied are shown as 32c and 32d; and 32e and 32f. The lateral zones 32a and 32b would be the zones where the seal bar 26 would form a seal and/or a cut between adjacent bags-in-process.

It should be noted that in both Fig. 3 and Fig. 4 the cross hatched areas represent the areas where a high level of electro-static charge has been applied. Not specifically identified in these figures is the zone where a lesser level of electro-static charge has been or may have optionally been applied. The area of lesser static charge could be the entire bag-in-process or any portion of the bag-in-process less than the whole bag.

The application of static to the bags-in-process proceeds with the film 22 threaded and jogged into place in the bag machine. Typically, upon startup the leading end of the bag-in-process film will be gripped between the draw rolls 20 and would extend past the seal bar area. During this set up stage some of the film may not be subjected to having static induced. After the film is jogged into place the position of the static inducer 12, which may include the ground base 34, is adjusted to position it on top of an area or zone, such as 32a in Fig. 4, that will be brought underneath the seal bar 26 during the next cycle or one of the next cycles of the bag machine. The timing of the machine, that is the period of the machine cycle when the seal is being made by the seal bar, is such that when the seal or seal/cut is being made a high level of static loading is applied by the static inducer 12 at the zone of the bag-in-process that will be drawn by the draw rolls 20 into the seal bar 26 zone when the next seal or seal/cut is made.

One embodiment envisioned by the inventor is that after the seal is made the bag-in-process is drawn downstream of the seal bar. During this take away draw the level of static loading in the seal area is reduced to a level that is high enough to help hold the bag closed to prevent air from being trapped or caught inside the bag but still low enough to allow convenient filling of the bag at a subsequent operation. A too high static load between the seals could create problems in such subsequent automatic packaging equipment as the bags have to be opened easily.

In one embodiment of the invention a first high level electro-static charge is imparted to the seal zone. This high level charge can be continuous across the film as shown in Fig. 3 or discontinuous as shown on Fig. 4. In addition, as alluded to earlier, two levels of static loading can be applied to each bag-in-process by changing the high voltage between two present adjustable valves―one being obviously lesser in intensity than the other. The idea is that the high level loading can be applied in the seal zone of the bag-in-process and a lesser or lower level of electro-static loading can be applied to the rest of, or a portion of, the rest of the bag-in-process. This is done by switching the static inducer 12 by means of a signal from the static generator 10 from a high level output to a lower level output and back again for each bag-in-process. The static generator will receive a signal from the bag maker machine control to allow correct timing. The timing could be controlled by any of several methods, one being to have the bag maker control signal the static generator with a pulse corresponding to a given point in the bag making cycle. From this point a timer controlling the static generator― either integral therewith, ancillary thereto or associated with the machine control will time out the duration of the high level charge inducement, drop down to a low level charge inducement then, for the next bag-in-process, raise to the high level charge inducement setting. One element of the invention is that the application of the induced static is timed to the bag making machine cycle rate and timing so that at least one and possibly several different levels of static load can be induced onto each bag-in-process.

The electrodes of the static inducer may be placed on an adjustable mount, not shown in the drawing figures, to allow correct positioning of the electrode on top of the repeat which would be, for instance, the seal area. The adjustable mount could be a rail with a cam lock, a rack and pinion assembly operated by a motor or hand wheel or any other device of like type.

Other methods of obtaining different levels of loading would include changing the distance between the static inducer electrode and the static inducer ground; inserting a shield between electrode and earth; or using an indexing ground whereby only part of the ground is blank and the remainder of the ground is insulated.

Figs. 3 and 4 illustrate that static loading can be done over the full film width as shown in Fig. 3 or only partially as shown in Fig. 4 depending on the results to be obtained. It is sometimes beneficial to apply the high level of static loading only at the bottom of the bag-in-process (that is the upper edges of the bag/film in Figs. 3 and 4) if problems with seal integrity only arise at the bottom of the bag. Again, to induce the static load on only parts of the bag-in-process, as shown by Fig. 4, it would be appropriate to install shorter static inducer electrodes or to insulate the ground element of the static inducer in all sections where static loading is not required.

It can be appreciated by persons having skill in this art that a timed static inducing invention is disclosed in this specification. The following claims, and equivalents thereof are directed to claim the invention in the scope of which the inventor believes he is entitled.

## Claims

1. A bag-in-process assembly having a plurality of plys of bag material, one ply of material laying over others of said plurality of plys of material;
a strong electro-static charge in a first zone of said bag-in-process assembly causing said one ply of material to be electro-statically attracted to said others of said plurality of plys of material.

2. The invention in accordance with Claim 1 wherein said strong electro-static charge in a first zone is discontinuous such that the electro-static charge in said first zone is bifurcated by a zone having no electro-static charge.

3. The invention in accordance with Claim 1 wherein said bag-in-process includes a seal zone and said strong electro-static charge is in a first zone in the vacinity of said seal zone.

4. A bag-in-process assembly having multiple zones comprising; a plurality of plys of bag material, one ply of material laying over others of said plurality of plys of material;
a strong electro-static charge in a first zone of said bag-in-process assembly causing said one ply of material to be electro-statically attracted to said others of said plurality of plys of material;
a second electro-static charge in a second zone of said bag-in-process assembly causing said one ply of material to be electro-statically attracted to said others of said plurality of plys of material.

5. The invention in accordance with Claim 4 wherein said strong electro-static charge is greater than said second electro-static charge.

6. The invention in accordance with Claim 5 wherein said first zone is that zone of a bag-in-process assembly in the vicinity of heat sealed portions of said bag-in-process assembly.

7. The method of inducing an electro-static charge to a bag-in-production assembly comprising two or more plys of material comprising the steps of:
indexing said bag-in-production assembly into proximate association with an electro-static inducing means;
energizing said static inducing means when said bag-in-production assembly is in proximate association with said electro-static inducing means;
de-energizing said static inducing means after a period of time;
inducing said bag-in-production assembly out of proximate association with said electro-static inducing means.
